# EUROPEAN PATENT APPLICATION

(11) **EP 1 956 545 A1**
(43) Date of publication of application: **13.08.2008**
(21) Application number: 05809421.0
(22) Date of filing: 24.11.2005
(51) Int. Cl.: G06Q 30/00

(54) **SPOT LABOR MARKET PROVISION SUPPORT SYSTEM**

(71) Applicant: LocationValue Inc., Tokyo 101-0047 (JP)
(72) Inventor: SUNAGAWA, Masaru, Chiyoda-ku Tokyo 1010047 (JP)
(74) Representative: Cross, Rupert Edward Blount
(86) International application number: PCT/JP2005/021568
(87) International publication number: WO 2007/060720

(57) **Abstract**

A market is provided where spot employment of a labor provider on the site can be offered in real time by using a location information system such as a mobile phone with a GPS function. A spot labor market provision support system (4) receives the current location of a mobile terminal (1) from the mobile terminal of a labor provider and stores it in a storage means. The system also receives the location and contents of a labor from an information terminal (2) of an employer and stores them in the storage means. Referring to the stored current locations of labor providers and the stored labor location, the system selects a labor provider according to a pre-stored labor possibility judgment function and sends the stored labor contents to the mobile terminal of the selected labor provider via a communication means.

## Description

### TECHNICAL FIELD

The present invention relates to an on-the-spot labour market providing support system, and in particular, relates to a system for supporting the realization of such an on-the-spot labour market, for the purpose of, when the demand for labour arises near a labour provider carrying a mobile device, recruiting a nearby candidate labour provider by using a mobile device and realizing prompt employment.

### BACKGROUND ART

Conventionally, employers have had a problem in that they could not hire an employee just for solving an unexpected problem on a medium- or long-term basis due to high labour costs. Also, they sometimes have been not able to hire an employee in time to solve the unexpected problem, since it takes approximately one week to secure an employee.

On the other hand, labour providers have had a problem that they could not use their irregular or unscheduled spare time efficiently; and they could not transform their current location into monetary value. Also, they sometimes have desired a shot-term trial before registering as a part-timer on a medium- or long-term basis.

Incidentally, the applicant is not aware of any publicly-known documents relating to the resolution of such problems.

### DISCLOSURE OF THE INVENTION

### PROBLEM TO BE SOLVED BY THE INVENTION

It is an object of the present invention to produce a market whereby a labour provider who happens to be nearby can be hired on-the-spot by using a location information system, such as a GPS locator-equipped cellular phone.

### MEANS FOR SOLVING THE PROBLEM

In order to support the resolution of the above-described problem, the present invention includes the following configuration.

A system is provided with: a communication means for communicating with external devices; a storage means for storing information; and a processing means for processing the information. Of the above-described, the storage means stores a predetermined labour availability judgment function for determining labour availability based on the current location of a labour provider and the work location. The processing means receives from the labour provider information device the current location of the mobile device via the communication means, and executes step (s1) of storing the received current location in the storage means. The processing means also receives from the employer information device the work location and work content via the communication means, and executes step (s2) of storing the received work location and work content in the storage means. The processing means then executes step (s3) of selecting a labour provider, in accordance with the stored labour availability judgment function, based on the stored labour provider's current location, work location, and work content. Next, the processing means executes step (s4) of sending the stored work content to the mobile device of the selected labour provider via the communication means.

According to the aspect of the invention, it is possible to send a labour recruitment notice only to labour providers who happen to be near the work location when the demand for labour arises.

Also, in another aspect of the invention, the processing means receives information indicating the candidacy of a labour provider, and executes step (s5) of storing the information in the storage means. In the aforementioned step (s3), only a labour provider conveying their candidacy can be selected based on the stored information indicating candidacy.

According to the above-described aspect of the invention, it is possible to send a notice only to labour providers conveying their candidacy.

In yet another aspect of the invention, a system according to claim 1 is provided with a means for retrieving the current time. In step (s2), the processing means also receives from the employer information device a work starting time via the communication means, and stores the work starting time in the storage means. The labour availability judgment function is used for selecting a labour provider based on the distance between the current location of a labour provider and the work location and the difference between the retrieved current time and the work starting time.

According to the above-described aspect of the invention, it is possible to send a notice only to labour providers who happen to be very near a work location, or to labour providers in relatively large area, in accordance with the remaining time before the work starting time. Consequently, it is possible to send a notice only to labour providers who can easily attend in light of the remaining time before the work starting time.

In still another aspect of the invention, in a system according to claim 3, the processing means receives from the labour provider information device the type of means of transportation, such as by foot or train, in step (s1), and stores the type of means of transportation in the storage means. The labour availability judgment function is used for selecting a labour provider who can arrive at the work location before the work starting time based on the distance between the current location of the labour provider and the work location, the difference between the current time retrieved from a clock and the stored work starting time, and the stored type of means of transportation.

According to the above-described aspect of the invention, whether or not a labour provider who is going to arrive at the work location on foot is at a location enabling them to attend the work in consideration of walking pace is determined; whether or not a labour provider who is going to arrive at the work location by train is at a location enabling them to attend the work in consideration of train speed is determined; and whether or not a labour provider who is going to rrive at the work location by vehicle is at a location enabling them to attend the work in consideration of a vehicle speed is determined.

In yet another aspect of the invention, in a system according to claim 4, the processing means retrieves the estimated travel time required, and stores the estimated travel time required in the storage means. The labour availability judgment function is used for selecting a labour provider who can be expected to arrive at the work location before a predetermined time based on the stored estimated travel time required, the current time retrieved from a clock, and the stored work starting time.

According to the above-described aspect of the invention, it is possible to send a notice only to a labour provider who can arrive before the work starting time based on, not only difference in pace or speed of the means of transportation, but also the travel time required in consideration of the route taken by each means of transportation.

In still further another aspect of the invention, in the system according to claim 1, the processing means updates the current location of a labour provider by repeatedly executing step (s1). The processing means then re-executes steps (s3, s4) based on the current location of the labour provider updated in step (s1).

According to the above-described aspect of the invention, a labour provider who was not a target of labour recruitment because of their location at the time when an employer registered the labour recruitment can be a target of labour recruitment, if the labour provider has travelled to another location at a later time and come closer to the work location.

In another aspect of the invention, in the system according to claim 1, the storage means stores the credibility of each labour provider based on their past work performance. The processing means then receives via the communication means job applications from the labour providers to whom the work content was addressed in step (s4), and executes step of storing the job applications in the storage means. When receiving a request from the employer information device, the processing means reads but the credibility of the labour providers whose job applications are stored, generates display information in which respective labour providers are listed in order of credibility, and sends this display information to the employer information device via the communication means.

According to the above-described aspect of the invention, it is easy for an employer to choose a labour provider based on credibility.

In another aspect of the invention, in the system according to claim 1, the storage means stores each labour provider's desired remuneration. The processing means receives via the communication means job applications from the labour providers those whom the work content are addressed to in step (s4), and stores the job applications in the storage means. When receiving a request from the employer information device, the processing means reads out from the storage means the desired remunerations of the labour providers whose job applications are stored, generates display information in which respective labour providers are listed in order of the amount of desired remuneration, and sends this display information to the employer information device via the communication means.

According to the above-described aspect of the invention, it is easy for an employer to choose a labour provider based on the amount of desired remuneration. The present invention has been devised in order to solve the above-described problems.

### EFFECT OF THE INVENTION

The present invention is configured and performs as described above, and as a result, a labour recruitment can be sent only to a labour provider who happens to be nearby when an unexpected labour demand arises, and accordingly the invention contributes to producing a market where a labour provider who happens to be nearby can be hired on-the-spot in real time.

### BEST MODES FOR CARRYING OUT THE INVENTION

Embodiments of the present invention will be described below.

### Embodiment 1

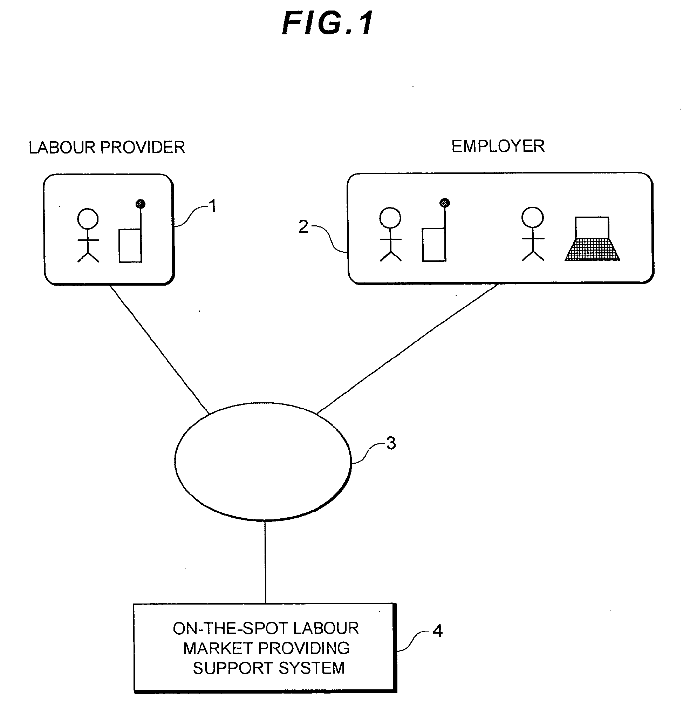

FIG. 1 is an overview of the entire system. The system includes: a labour provider information device 1; an employer information device 2; an on-the-spot labour market providing support system 4; and a communication network 3 allowing data communication between them.

In the present embodiment, the labour provider information device 1 is, for example, a cellular phone equipped with a self-positioning feature using a GPS, and featuring a web browser. However, the labour provider information device 1 may be another mobile device, such as a PDA, provided that it is equipped with an equivalent feature. The employer information device 2 may be either a mobile device or a so-called personal computer, equipped with a built-in web browser. The communication network 3 includes the internet. The on-the-spot labour market providing support system 4 has a WEB server function, an application server function used by the WEB server, and a database server function.

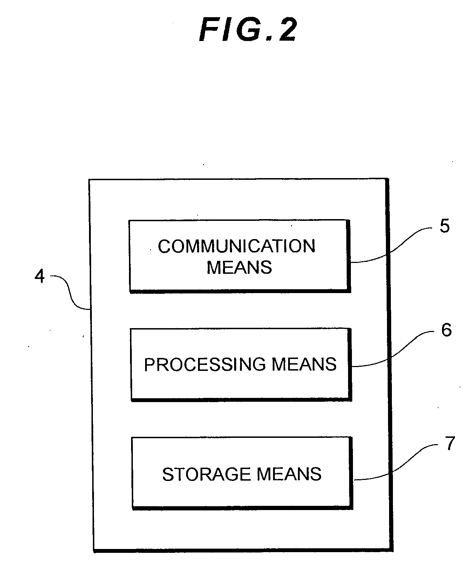

FIG. 2 is an overview of a hardware configuration for the on-the-spot labour market providing support system 4. The system 4 includes: a communication means, such as a router, for performing a data communication with an external device via the communication network 3; a processing means 6, such as a CPU, for executing program processing and processing information; and a storage means 7, which is a hard disk drive or the like, for storing information. They are not limited to one physical component, and the system 4 may have an environment in which they are arranged decentrally in a plurality of computers and the computers perform decentralized processing.

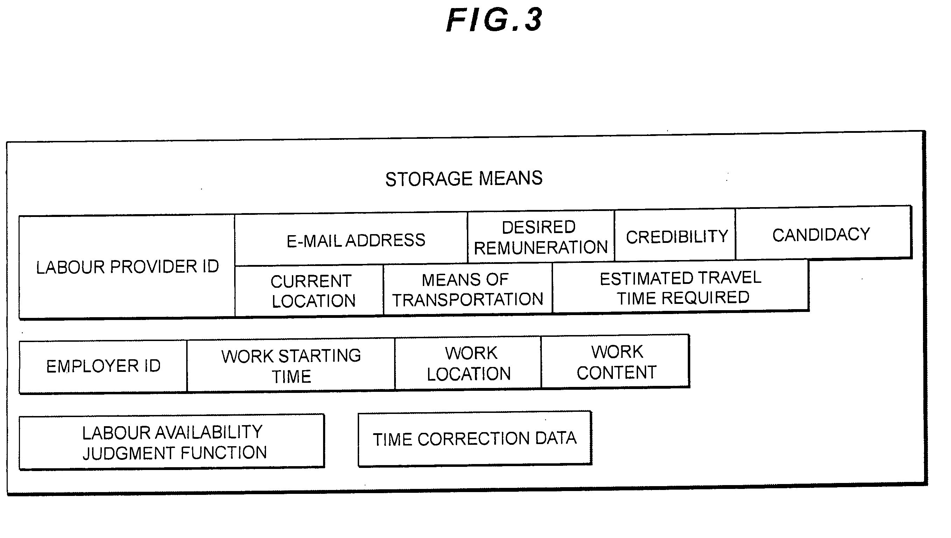

FIG. 3 is a structure diagram of main data stored in the storage means 7. The e-mail address, desired remuneration, credibility, candidacy, current location, means of transportation to the work location, and estimated travel time required for arriving at the work station of a labour provider are associated with a labour provider ID and stored.

In the present embodiment of the invention, a labour provider ID is identification data, such as the telephone number of a cellular phone, allowing the identification of the labour provider information device 1. IDs other than the telephone number may be used provided that the IDs can identify the labour provider information device. The e-mail address shows an e-mail address set for the cellular phone. The desired remuneration shows the amount of desired remuneration which the labour provider registered in advance. The credibility shows the result of an evaluation in which a past employer has evaluated the labour provider, and the more satisfactory work performance to employers labour providers provide, the higher credibility they will be given. The candidacy shows whether or not a labour provider has a candidacy and can be changed by the labour provider any time. The current location stores the location of the labour provider mobile device 1 pinpointed by the labour provider mobile device 1 itself. The means of transportation shows which type of means of transportation, such as by foot, train, or car, labour providers are going to take when they travel to work locations and can be registered by the labour providers. The estimated travel time required shows an estimate of the anticipated amount of time required for a labour provider to travel from the current location to the work location by the currently registered means of transportation. It may be calculated in the on-the-spot labour market providing support system 4, or may be retrieved by means of an external system for calculating the time required.

The mail address and desired remuneration are associated with the labour provider ID when a labour provider using the present system signs up for membership registration. When signing up for membership registration, their name, gender, date of birth, desired job, and photographic image may also be registered. Those items can be registered from the labour provider information device 1 by using a web browser.

The storage means 7 stores the work starting time, the work location, and the work content of a job for which an employer requests manpower, in association with an employer ID. The work location is registered as a coordinate so that it can be compared with positioning data sent from the labour provider information device 1. The employer ID is issued when an employer signs up for membership registration. When the employer registers their manpower requests, the system asks the employer to log in with their employer ID, and verifies the employer ID. When the employer registers their manpower requests, the name of the employer, name of person in charge, work content for an advertised job, precedence criteria for the recruitment (e.g. on-duty hours, gender, experience, remuneration, credibility, etc.), may be registered, and the priority order of the precedence criteria may also be registered so that labour providers can be selected in order of descending relevancy. The employer can register those pieces of information from the information device 2 by using a web browser.

The storage means 7 also stores a predetermined labour availability judgment function which determines labour availability based on the current location of a labour provider and a work location. Details of the function will be describer later below. Furthermore, the storage means stores time correction data. When a labour provider inputs the past record of the travel time required for arriving at the work location, the difference from the estimated travel time required is calculated and the difference in time is stored as time correction data. At the time when the aforementioned estimated travel time required is retrieved, time correction data that corresponds to a route is retrieved from those pieces of time correction data and is modified for the purpose of increasing the precision of the estimated travel time required.

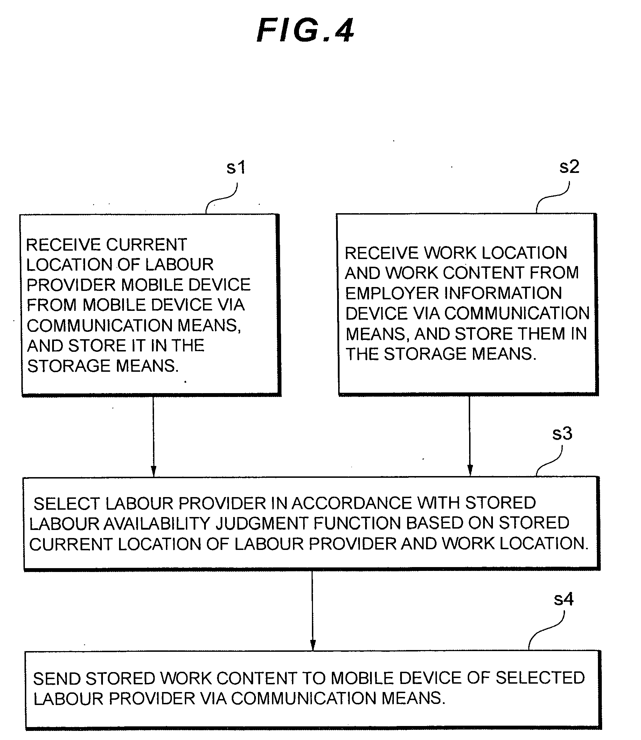

Next, operations in the present embodiment will be described with reference to FIG. 4. The processing means 6 receives from the labour provider mobile device 1 the current location of the mobile device 1 via the communication means 5, and stores the current location in the storage means 7 (s1). In this step, the current location data sent from the mobile device 1 is sent in association with the ID of the labour provider to which the mobile device 1 belongs.

The processing means 6 receives, at a separate time from the above step, from the employer information device 2 a work location and work content via the communication means 5, and stores them in the storage means 7 (s2). In this step, as described above, the system asks an employer to log in with their employer ID, verifies the employer ID, and then allows the employer to input information.

The processing means 6 then selects a labour provider, in accordance with the stored labour availability judgment function, based on the stored current location of the labour provider and work location (s3).

Further details of those operations in the present embodiment will be described below. In accordance with the labour availability judgment function, only a labour provider who is currently at a location within the area of a circle of the radius of a certain distance from the work location can be selected. The processing means 5 reads out from the storage means 7 the coordinates of the current locations of the labour providers and the work location, calculates a distance from the current location to the work location, and stores the distance in the storage means 7. Also, the processing means 5 reads out from the storage means 7 the threshold values of the distance and a distance set in advance, and selects a labour provider whose calculated distance is shorter than the threshold value.

The processing means 6 then sends the stored work content to the mobile device 1 of the selected labour provider via the communication means (s4). This notice is addressed to the e-mail address of the labour provider mobile device 1.

According to operations in those steps, it is possible to send a labour recruitment notice only to labour providers who happen to be near the work location when the demand for labour from an employer arises.

A labour provider who receives a labour recruitment notice can apply for the job by clicking a hypertext link included in the notice. When receiving this application, the processing means 6 in the on-the-spot labour market providing support system 4 selects information on the labour provider who made the application from the storage means 7, builds a list of labour providers who made applications and information on them in association with the employer who made the manpower request, and stores the list in the storage means 7. Upon receiving a request for browsing a list from the employer information device 2, the processing means 6 reads out the list from the storage means 7, and sends the list to the employer information device 2. The employer browses the list of the labour providers who made applications, selects personnel to be employed from the list, sends the selection result to the on-the-spot labour market providing support system 4. The processing means 6 in the system 4 addresses to the e-mail address of labour providers, who are included in the received selection result, a message advising them of their being hired, and then executes predetermined processing for completing an employment agreement. A labour provider who receives an employment message travels to the designated work location and provides their labour. The employer reports the credibility of each labour provider based on the results of their labour to the on-the-spot labour market providing support system 4, and the processing means in the system 4 updates the credibility of each labour provider in the storage means 7 upon receiving the report. Also, the labour reports the record of actual time required for traveling to the work location to the on-the-spot labour market providing support system 4, and the process means 6 in the system 4 calculates correction data for the time required based on the reported record of actual time required, and stores the correction data in the storage means 7. Those operations can be performed through the labour provider information device 1 and the employer information device 2 by means of a web browser. In those operations, the labour provider information device 1, the employer information device 2, and the on-the-spot labour market providing support system 4 transmit information between them via the communication network 3.

### Embodiment 2

Next, a variation of the invention will be described below. In the present embodiment, the processing means 6 receives from the labour provider information device 1 information indicating their candidacy via the communication means 5, and executes step (s5) of storing the information in the storage means 7. In the aforementioned step s3, only a labour provider conveying their candidacy is selected based on the stored information indicating candidacy. Other operations are the same as those described in the embodiment 1.

According to the above-described embodiment, it is possible to send a notice only to labour provider conveying their candidacy.

### Embodiment 3

Another variation of the invention will be described below. In the present embodiment, the system in embodiment 1 is provided with a means for retrieving the current time. This means may be a clock provided in the on-the-spot labour market providing support system 4, or a means for retrieving the time from an external system.

In the present embodiment, the processing means 6 receives from the employer information device a work starting time in addition to the aforementioned time via the communication means 5, and stores the work starting time in the storage means 7. The labour availability judgment function is used for selecting a labour provider based on the distance between the current location of the labour provider and the work location and the difference between the retrieved current time and the stored work starting time.

Further details of the labour availability judgment function will be described below. The labour availability judgment function performs the following calculation, which is different from that in the embodiment 1. Namely, the processing means 6 reads out a work starting time from the storage means 7, determines a difference from the current time, and stores the difference in the storage means 7. Also, the processing means 6 reads out this difference from the storage means 7, inputs the difference into a linear proportional function having a positive coefficient, and stores the threshold value of the distance, which is the calculation result, in the storage means 7. Furthermore, the processing means 6 reads out from the storage means 7 the coordinates of the current location of a labour provider and a work location, determines a distance between them, and stores the distance in the storage means 7. The processing means 6 then reads out from the storage means 7 the distance and the previously calculated threshold value of the distance, and selects a labour provider whose distance is shorter than the threshold value. Other operations are the same as those described in the embodiment 1.

According to the above-described embodiment, it is possible to send a notice only to labour providers who happen to be very near a work location, or to labour providers in relatively large area, in accordance with remaining time before the work starting time. Consequently, it is possible to send a notice only to labour providers who can easily attend in light of the remaining time before the work starting time.

### Embodiment 4

Yet another variation of the invention will be described below. In the embodiment 3, the processing means 6 receives from the labour provider information device 1 the type of means of transportation, such as by foot or train, in step s1, and stores the type of means of transportation in the storage means 7. The labour availability judgment function is used for selecting a labour provider who can arrive at the work location before the work starting time based on the distance between the current location of the labour provider and a work location, the difference between the current time retrieved from a clock and the stored work starting time, and the stored type of means of transportation.

Further details of the labour availability judgment function will be described below. In the labour availability judgment function in the embodiment 3, the proportionality coefficient varies depending on the type of means of transportation. A table of proportionality coefficients that vary depending on the type of means of transportation is created in advance and stored in the storage means 7. When reading the value of the aforementioned proportionality coefficient, the processing means 6 reads the proportionality coefficient corresponding to the type of means of transportation from the storage means 7 and adopts the read proportionality coefficient. The slower the speed of means of transportation, the smaller the value of the proportionality coefficient should be set. Other operations are the same as those described in embodiment 3.

According to the above-described embodiment, for example, whether or not a labour provider who is going to arrive at the work location on foot is at a location enabling them to attend the work in consideration of walking pace is determined; whether or not a labour provider who is going to arrive at the work location by train is at a location enabling them to attend the work in consideration of train speed is determined; and whether or not a labour provider who is going to rrive at the work location by vehicle is at a location enabling them to attend the work in consideration of a vehicle speed is determined.

In still another variation of the invention, in the embodiment 4, the processing means 6 retrieves the estimated travel time required, and stores the estimated travel time required in the storage means 7. As a method for retrieving an estimated travel time required, the method in which the processing means 6 makes inquiries with an external specialized system and retrieves the value can be used, although the estimated travel time required may be calculated within the system itself. The external specialized system may be, for example, an external navigation system if the means of transportation is by foot, or an external transfer guide system if the means of transportation is a train. Information on an estimated travel time required can be retrieved by making inquiries with those external systems.

A labour availability judgment function, which is different from the one used in the embodiment 4, is used for selecting a labour provider who can be expected to arrive at the work location before a predetermined time based on the stored estimated travel time required, the current time retrieved from a clock, and the stored work starting time. More specifically, the processing means 6 reads out a work starting time from the storage means 7, determines a difference from the current time, and stores the difference in the storage means 7. Also, the processing means 6 reads out from the storage means 7 the current location of the labour provider, the work location, and the type of means of transportation to the work location, determines an estimated travel time required based on those pieces of information, and stores the estimated travel time required in the storage means 7. The processing means 6 then reads out from the storage means 7 the difference between the work starting time and the current time and the estimated travel time required, and selects a labour provider whose estimated travel time required is shorter than the aforementioned difference. Other operations are the same as those described in embodiment 4.

According to the above-described embodiment, it is possible to send a notice only to a labour provider who can arrive before the work starting time based on, not only difference in pace or speed of the means of transportation, but also the travel time required in consideration of the route taken by each means of transportation.

### Embodiment 6

Yet another variation will be described below. In embodiment 1, the processing means 6 updates the current location of a labour provider stored in the storage means 7 by repeatedly executing step s1. The processing means 6 then re-executes steps s3 and s4 based on the current location of the labour provider updated in step s1. Other operations are the same as those described in embodiment 1.

According to the above-described embodiment, a labour provider who was not a target of a labour recruitment because of their location at the time when an employer registered the labour recruitment can be a target of the labour recruitment, if the labour provider has travelled to another location at a later time and come closer to the work location.

### Embodiment 7

Another embodiment of the invention will be described. In embodiment 1, the storage means 7 stores the credibility of each labour provider based on their past work performance. The processing means 6 then receives via the communication means 5 job applications from the labour providers to whom the work content was addressed in step s4, and stores the job applications in the storage means 7. When receiving a request from the employer information device 2, the processing means 6 reads out the credibility of the labour providers whose job applications are stored, generates display information in which respective labour providers are listed in order of descending credibility, and sends this display information to the employer information device 2 via the communication means 5. Other operations are the same as those described in embodiment 1.

According to the above-described embodiment, it is easy for an employer to choose a labour provider whose credibility is high.

### Embodiment 8

Yet another embodiment will be described below. In embodiment 1, the storage means 7 stores desired remunerations provided by each labour provider. The processing means 6 receives via the communication means 5 job applications from the labour providers to whom the work content was addressed in step s4, and stores the job applications in the storage means 7. When receiving a request from the employer information device 2, the processing means 6 reads out from the storage means 7 the desired remuneration of the labour providers whose job applications are stored, generates display information in which respective labour providers are listed in order of ascending amount of desired remuneration, and sends this display information to the employer information device 2 via the communication means 5.

According to the above-described embodiment, it is easy for an employer to choose a labour provider whose remuneration will be low.

### Embodiment 9

Still another embodiment will be described below. In embodiment 1, the storage means 7 stores precedence criteria and a priority order for an employer to recruit a labour provider. As precedence criteria, for example, duty hours, gender, experience, remuneration, and credibility are stored, and the priority order of precedence criteria is stored in a manner in which, for example, the first priority is gender, the second is experience, the third is remuneration, and the fourth is on-duty hours. An employer registers those precedence criteria and priority order from the information device 2, and then the processing means 6 in the support system 4 stores those pieces of information received via the communication means 5 in the storage means 7, in association with an employer ID.
A labour provider registers from the mobile device 1 the content of the above-described precedence criteria, namely, available on-duty hours, male or female in gender, level of experience, and the amount of desired remuneration, and then the processing means 6 stores those pieces of information received via the communication means 5 in the storage means 7, in association with a labour provider ID (regarding credibility, the credibility of each labour provider based on their past work performance is input by employers who hired the labour providers in the past and stored in the storage means 7 in advance).
Before sending to the employer information device 2 the list of labour providers selected in step s3, the processing means 6 builds a list of labour providers by sorting them in accordance with the priority order of the precedence criteria registered by the employer, and then sends the list to the information device 2. For example, the list may be built in a manner in which points (weightings) are given to labour providers in order of descending priority, for example, a labour provider who matches the gender requirements will be given 4-points, a labour provider who matches the experience requirements will be given 3-points, a labour provider who matches the remuneration requirements will be given 2-points, and a labour provider who matches the on-duty hours requirements will be given 1-point, and the labour providers are sorted in the descending order of total points given.
According to the above-described embodiment, it is easy for an employer to choose a labour provider who meets advantageous requirements.
While the above-described embodiments are embodiments that appear to be the best for the invention, the scope of the invention should not be limited to the techniques in each of the above-described embodiments.

### INDUSTRIALAPPLICABILITY

The present invention can be conveniently utilized in the following cases. For example, when an inventory of products has to be made but the manpower is not enough; when fillers are needed because an exhibition does not attract many people; when someone needs a person to buy a ticket on their behalf; when something unexpected comes up and another store-tender is needed; when a key part-timer fails to attend on an important business day; when someone wishes to go shopping but cannot move because of their sore foot; when someone in Tokyo cannot go to a featured product sale in Osaka; when someone can find no one to help them move house; and when someone wants to help a distant friend in Hokkaido.

### BRIEF DESCRIPTION OF THE DRAWINGS

[FIG. 1] Overview of the entire system
[FIG. 2] Overview of the configuration for the on-the-spot labour market providing support system
[FIG. 3] Structure diagram of main data stored in the storage means
[FIG. 4] Flowchart of the processing executed by the processing means

### EXPLANATION OF REFERENCE NUMERALS

- 1: Labour provider mobile device
- 2: Employer information device
- 3: Communication network
- 4: On-the-spot labour market providing support system
- 5: Communication means
- 6: Processing means
- 7: Storage means

## Claims

1. An on-the-spot labour market providing support system comprising:
a communication means for communicating with an external device;
a storage means for storing information; and
a processing means for processing information, wherein
the storage means stores a predetermined labour availability judgment function determining a labour availability based on the current location of a labour provider and a work location; and wherein
the processing means executes:
a step (s1) of receiving from a labour provider mobile device the current location of the mobile device via a communication means, and storing the received current location in the storage means;
a step (s2) of receiving from an employer information device a work location and work content via the communication means, and storing the received work location and work content in the storage means;
a step (s3) of selecting a labour provider, in accordance with the stored labour availability judgment function, based on the stored current location of the labour provider and the work location; and
a step (s4) of sending the stored work content to the mobile device of the selected labour provider via the communication means.

2. The on-the-spot labour market providing support system according to claim 1, wherein
the processing means executes:
a step (s5) of receiving information indicating candidacy from a labour provider via the communication means, and storing the information in the storage means; and wherein
in step (s3), only a labour provider conveying candidacy is selected based on the stored information indicating candidacy.

3. The on-the-spot labour market providing support system according to claim 1, further comprising a means for retrieving a current time, wherein
the processing means also receives from the employer information device a work starting time via the communication means, and stores the work starting time in the storage means; and wherein
the labour availability judgment function is used for selecting a labour provider based on the distance between the current location of a labour provider and the work location and the difference between the retrieved current time and the stored work starting time.

4. The on-the-spot labour market providing support system according to claim 3, wherein
in the step (s1), the processing means also receives a type of transportation means, such as by foot or train, from the labour provider mobile device, and stores the type of transportation means in the storage means; and wherein
the labour availability judgment function is used for selecting a labour provider who can be expected to arrive at the work location before a predetermined time based on a distance between the current location of the labour provider and the work location, the difference between the current time retrieved from a clock and the stored work starting time, and the stored type of transportation means.

5. The on-the-spot labour market providing support system according to claim 4, wherein
with respect to the stored transportation means of the labour provider, the processing means retrieves an estimated travel time required for traveling between the current location of the labour provider and the work location, and stores the estimated travel time required in the storage means; and wherein
the labour availability judgment function is used for selecting a labour provider who can be expected to arrive at the work location before a predetermined time based on the stored estimated travel time required, the current time retrieved from a clock, and the stored work starting time.

6. The on-the-spot labour market providing support system according to claim 1, wherein
the processing means updates the current location of a labour provider by repeatedly executing processing in the step (s1); and re-executes the steps (s3, s4) based on the current location of the labour provider updated in the step (s1).

7. The on-the-spot labour market providing support system according to claim 1, wherein
the storage means stores credibility based on a past work performance of each labour provider; and
the processing means executes a step of receiving a job application from labour providers to whom the work content was addressed in step (s4), and storing the job application in the storage means, and
a step of, when receiving a request from the employer information device, reading out the credibility of the labour providers whose job applications are stored, generating display information in which respective labour providers are listed in the order of credibility, and sending this display information to the employer information device via the communication means.

8. The on-the-spot labour market providing support system according to claim 1, wherein
the storage means stores desired remuneration made by each labour provider; and wherein
the processing means executes:
a step of receiving a job application from labour providers to whom the work content was addressed in step (s4), and storing the job application in the storage means; and
a step of, when receiving a request from the employer information device, reading out the desired remuneration of each labour provider whose job application is stored, generating display information in which respective labour providers are listed in the order of desired remunerations, and sending this display information to the employer information device via the communication means.
